# EUROPÄISCHE PATENTSCHRIFT

(11) **EP 3 963 242 B1**
(45) Veröffentlichungstag und Bekanntmachung des Hinweises auf die Patenterteilung: **22.11.2023**
(21) Anmeldenummer: 20721483.4
(22) Anmeldetag: 20.04.2020
(51) Int. Cl.: F16L 25/01, F16L 53/38, H01R 13/00, F16L 37/244

(54) **VORRICHTUNG ZUM VERBINDEN VON FLUIDLEITUNGEN UND WEITEREN LEITUNGEN**
DEVICE FOR CONNECTING FLUID LINES AND OTHER LINES
DISPOSITIF SERVANT À RACCORDER DES CONDUITES DE FLUIDE ET D'AUTRES CONDUITES

(30) Priorität: 30.04.2019 DE 102019111131
(43) Veröffentlichungstag der Anmeldung: 09.03.2022
(73) Patentinhaber: NORMA Germany GmbH, 63477 Maintal (DE)
(72) Erfinder: MANN, Stephan, 63477 Maintal (DE)
(74) Vertreter: Patentanwälte Olbricht Buchhold Keulertz
(86) Internationale Anmeldenummer: PCT/EP2020/061022
(87) Internationale Veröffentlichungsnummer: WO 2020/221616

(56) Entgegenhaltungen:
- DE-A1- 10 253 796
- DE-A1-102010 053 736
- US-A- 5 658 159
- US-A1- 2016 273 279

## Beschreibung

Die Erfindung betrifft eine Vorrichtung zum Verbinden von Fluidleitungen und weiteren Leitungen und ein System umfassend zwei Fluidleitungen, zwei weitere Leitungen und die Vorrichtung.

Um eine sichere Verbindung zwischen zwei Fluidleitungen herzustellen, werden beispielsweise Steckverbindungen genutzt. Ebenso werden bei elektrischen Leitungen Steckverbindungen verwendet, um zwei elektrische Leitungen miteinander zu verbinden. Bei Systemen, die Fluidleitungen und elektrische Leitungen aufweisen, werden Multikonnektoren, wie z. B. in DE 10 2010 053 736 A1 beschrieben, verwendet, um die Fluidleitungen und elektrischen Leitungen gleichzeitig zu verbinden. Diese Multikonnektoren umfassen zwei Hälften, die jeweils an verschiedenen Leitungen angeordnet sind. Weiter weisen die Multikonnektoren ein männliches Verbindungsstück für Fluidleitungen und ein weibliches Verbindungsstück für Fluidleitungen auf, die jeweils an einer der Hälften angeordnet sind. Weiter weisen die Multikonnektoren ein männliches Verbindungsstück für elektrische Leitungen und ein weibliches Verbindungsstück für elektrische Leitung auf, die ebenfalls jeweils an verschiedenen Hälften angeordnet sind. Dabei werden die männlichen Verbindungsstücke entlang einer Verbindungsachse des Multikonnektors in die jeweiligen weiblichen Verbindungsstücke eingeführt, um eine Verbindung zwischen den Fluidleitungen und den elektrischen Leitungen bereitzustellen. Zur Herstellung der Verbindungsstücke ist es dabei nötig, lediglich geringe Toleranzen bei der Fertigung zu erlauben, um eine sichere Verbindung unter allen Toleranzbedingungen zu gewährleisten. Weiter fehlt es an einer Indikation, die über eine korrekte Verbindung zwischen den Leitungen informiert. Damit benötigt dieser Multikonnektor einen hohen Aufwand bei der Herstellung und bei der Bedienung.

Aus DE 10 2010 053736 A1 ist eine Anschlussvorrichtung für eine einen Fluidkanal enthaltende Fluidleitung bekannt. Ein Anschlussstück enthält eine Steckaufnahme zum Einstecken der Fluidleitung. Ein Befestigungsabschnitt erlaubt das Einschrauben des Anschlussstückes in eine Schraubaufnahme eines Gegenanschlussstückes. Durch eine besondere Anordnung elektrischer Kontakte und Leiter ist gewährleistet, dass im eingeschraubten Zustand des Anschlussstückes stets eine zuordnungsrichtige elektrische Verbindung zwischen elektrischen Leitungen des Gegenanschlussstückes und elektrischen Signalleitern der Fluidleitung möglich ist.

Aus US 2016/0273279 A1 ist eine Trocken-Gegenstück-Verbindungsbaugruppe bekannt, die einen Klemmführungsring, der um ein Bohrlochrohr herum angeordnet ist und einen ersten axialen Kanal zur Aufnahme eines ersten Splitterblocks eines ersten Trocken-Gegenstück-Verbinders definiert, wobei der erste Trocken-Gegenstück-Verbinder eine erste winklige Eingriffsfläche und ein oder mehrere erste Kommunikationsmedien umfasst, die sich innerhalb des ersten Trocken-Gegenstück-Verbinders erstrecken, und einen Haltering umfasst, der um das Bohrlochrohr herum angeordnet ist und einen zweiten axialen Kanal definiert, der derart ausgebildet ist, dass er einen zweiten Splitterblock eines zweiten Trocken-Gegenstück-Verbinders aufnimmt, der so konfiguriert ist, dass er mit dem ersten Trocken-Gegenstück-Verbinder zusammenpasst, wobei der zweite Trocken-Gegenstück-Verbinder eine zweite winklige Eingriffsfläche und ein oder mehrere zweite Kommunikationsmedien umfasst, die sich innerhalb des zweiten Trocken-Gegenstück-Verbinders erstrecken.

DE 10 2010 053736 A1 offenbart eine Anschlussvorrichtung zum Verbinden von Fluidleitungen und elektrischen Leitungen.

Als Aufgabe der Erfindung kann daher angesehen werden, eine verbesserte Vorrichtung und ein verbessertes System bereitzustellen, die weniger Aufwand bei der Herstellung und bei der Bedienung benötigen.

Hauptmerkmale der Erfindung sind in den Ansprüchen 1 und 13 angegeben. Ausgestaltungen sind Gegenstand der Ansprüche 2 bis 12 und 14.

Es wird eine Vorrichtung zum Verbinden von Fluidleitungen und weiteren Leitungen bereitgestellt, wobei die Vorrichtung eine erste Verbindungskomponente zum Verbinden von Fluidleitungen und eine zweite Verbindungskomponente zum Verbinden von weiteren Leitungen aufweist, wobei die erste Verbindungskomponente eine erste Funktionsstellung, in der die erste Verbindungskomponente zwei Fluidleitungen voneinander löst, und eine zweite Funktionsstellung, in der die erste Verbindungskomponente die zwei Fluidleitungen verbindet, aufweist, wobei eine Bewegung der ersten Verbindungskomponente entlang einer Verbindungsachse die erste Verbindungskomponente zwischen der ersten und zweiten Funktionsstellung überführt, wobei erfindungsgemäß vorgesehen ist, dass die zweite Verbindungskomponente in einer Verbindungsstellung zwei weitere Leitungen verbindet und in einer Freigabestellung die zwei weiteren Leitungen voneinander löst, wobei eine Bewegung der zweiten Verbindungskomponente in einer Umfangsrichtung um die Verbindungsachse die zweite Verbindungskomponente zwischen der Freigabestellung und der Verbindungsstellung überführt, wenn die erste Verbindungskomponente in der zweiten Funktionsstellung ist.

Mit der Erfindung wird eine Vorrichtung zum Verbinden von Fluidleitungen und weiteren Leitungen bereitgestellt, bei der das Verbinden der Fluidleitungen und weiteren Leitungen in zwei Schritten erfolgt. Zunächst wird mittels der ersten Verbindungskomponente eine Verbindung zwischen den Fluidleitungen hergestellt, indem die erste Verbindungskomponente von einer ersten Funktionsstellung, in der die erste Verbindungskomponente die beiden Fluidleitungen voneinander löst, entlang einer Verbindungsachse in eine zweite Funktionsstellung bewegt wird, in der die erste Verbindungskomponente die beiden Fluidleitungen miteinander verbindet. Wenn die beiden Fluidleitungen miteinander verbunden sind, d.h. wenn die erste Verbindungskomponente in der zweiten Funktionsstellung ist, erfolgt eine Bewegung der Vorrichtung in Umfangsrichtung um die Verbindungsachse. Dabei wird die zweite Verbindungskomponente von einer Freigabestellung, in der die zweite Verbindungskomponente die weiteren Leitungen voneinander löst, in eine Verbindungsstellung überführt, in der die zweite Verbindungskomponente die weiteren Leitungen miteinander verbindet. Die Bewegung der Vorrichtung in Umfangsrichtung kann dabei eine Drehung der Vorrichtung um die Verbindungsachse sein. Dabei ist das Überführen der zweiten Verbindungskomponente in die Verbindungsstellung nur dann möglich, wenn die erste Verbindungskomponente in der zweiten Funktionsstellung ist, d.h. wenn die beiden Fluidleitungen miteinander verbunden sind. Wenn die weiteren Leitungen z. B. elektrische Leitungen sind, kann mit der Verbindung der beiden elektrischen Leitungen damit zum Beispiel durch das Schließen eines elektrischen Stromkreises festgestellt werden, ob die Verbindung zwischen den Fluidleitungen korrekt durchgeführt wurde. Wenn die weiteren Leitungen optische Leitungen sind, kann durch das Empfangen eines optischen Signals die Information über eine korrekte Verbindung der beiden Fluidleitungen bereitgestellt werden. Damit wird durch die Erfindung eine Vorrichtung bereitgestellt, mit der eine Indikation über die korrekte Verbindung der Fluidleitungen und der weiteren Leitungen bereitgestellt wird. Damit wird eine Vorrichtung bereitgestellt, die im Vergleich zum Stand der Technik weniger Aufwand bei der Herstellung und bei der Bedienung benötigt.

Die Vorrichtung weist erfindungsgemäß weiter eine Verriegelungskomponente auf, die in einer Verriegelungsstellung die erste Verbindungskomponente in der zweiten Funktionsstellung verriegelt und in einer Entriegelungsstellung die erste Verbindungskomponente frei gibt.

Damit wird eine Verriegelung bereitgestellt, die eine mittels der ersten Verbindungskomponente hergestellten Verbindung zwischen zwei Fluidleitungen verriegelt. Dies erhöht die Verbindungssicherheit zwischen den beiden Fluidleitungen.

Weiter weist die Verriegelungskomponente gemäß der Erfindung ein Riegelelement auf, das entlang der Umfangsrichtung ausgerichtet ist, wobei eine Bewegung der Verriegelungskomponente in Umfangsrichtung die Verriegelungskomponente zwischen der Verriegelungsstellung und der Entriegelungsstellung überführt, wenn die erste Verbindungskomponente in der zweiten Funktionsstellung ist.

Die Verriegelung mittels der Verriegelungskomponente erfolgt erst dann, wenn die erste Verbindungskomponente in der zweiten Funktionsstellung ist. Dabei ist das Riegelelement der Verriegelungskomponente entlang der Umfangsrichtung ausgerichtet. D.h., dass das Riegelelement bei einer Bewegung der Verriegelungskomponente in Umfangsrichtung entlang einer Längsachse des Riegelelements bewegt wird. Das Riegelelement kann dabei in eine Buchse eingeführt werden, wobei das Riegelelement und die Buchse an zwei verschiedenen Fluidleitungen angeordnet sind. Damit kann eine effektive Verriegelung zwischen den beiden Fluidleitungen bereitgestellt werden.

Weiter kann die zweite Verbindungskomponente dabei die Verriegelungskomponente sein.

Die Verriegelungskomponente und die zweite Verbindungskomponente sind damit einstückig ausgebildet. Bei einer Verriegelung der zweiten Funktionsstellung der ersten Verbindungskomponente wird damit mittels der zweiten Verbindungskomponente eine Verriegelung durchgeführt, bei der gleichzeitig die zweite Verbindungskomponente in die Verbindungsstellung überführt wird. Die Verbindungsstellung ist in diesem Fall gleichzeitig die Verriegelungsstellung der Verriegelungskomponente. Damit wird eine platzsparende multifunktionale Komponente für die Vorrichtung bereitgestellt. Weiter wird dadurch die Bedienung der Vorrichtung weiter vereinfacht.

In einem weiteren Beispiel kann die erste Verbindungskomponente ein erstes männliches Verbindungselement an einer der zwei Fluidleitungen und ein erstes weibliches Verbindungselement an der anderen der zwei Fluidleitungen aufweisen.

Die Verbindung der beiden Fluidleitung kann damit dadurch erfolgen, dass das erste männliche Verbindungselement, das an der einen Fluidleitung angeordnet ist, in das erste weibliche Verbindungselement eingeführt wird, das an der anderen Fluidleitung angeordnet ist.

Dabei können das erste männliche Verbindungselement und das erste weibliche Verbindungselement entlang der Verbindungsachse ausgerichtet sein.

Durch die Ausrichtung des ersten männlichen Verbindungselements und des ersten weiblichen Verbindungselements entlang der Verbindungsachse wird lediglich eine Bewegung der Vorrichtung in Richtung der Verbindungsachse benötigt, um das erste männliche Verbindungselement in das erste weibliche Verbindungselement einzuführen. Mit der Bewegung der Vorrichtung in Richtung der Verbindungsachse ist in diesem Fall vorausgesetzt, dass so entlang der Verbindungsachse angeordnet und ausgerichtet sind, dass das erste männliche Verbindungselement und das erste weibliche Verbindungselement miteinander fluchten. Das erste männliche Verbindungselement kann damit in das erste weibliche Verbindungselement eingeführt werden. Dabei reicht eine Relativbewegung zwischen dem ersten männlichen Verbindungselement und dem ersten weiblichen Verbindungselement aus, d. h. dass lediglich eines der beiden Verbindungselemente, d.h. entweder das erste männliche Verbindungselement oder das erste weibliche Verbindungselement, in Umfangsrichtung bewegt werden muss.

Weiter kann die zweite Verbindungskomponente ein zweites männliches Verbindungselement an einer der zwei weiteren Leitungen und ein zweites weibliches Verbindungselement an der anderen der zwei weiteren Leitungen aufweisen.

Damit kann eine Verbindung zwischen den weiteren Leitungen dadurch erfolgen, dass das zweite männliche Verbindungselement, das an einer der beiden weiteren Leitungen angeschlossen ist, in das zweite weibliche Verbindungselement, das an einer anderen der beiden weiteren Leitungen angeschlossen ist, eingeführt wird.

Dabei können das zweite männliche Verbindungselement und das zweite weibliche Verbindungselement entlang der Umfangsrichtung ausgerichtet sein.

Das Ausrichten des zweiten männlichen Verbindungselements und des zweiten weiblichen Verbindungselements entlang der Umfangsrichtung bewirkt, dass eine Bewegung des zweiten männlichen Verbindungselements und des zweiten weiblichen Verbindungselements in Umfangsrichtung zu einer Verbindung der beiden weiteren Leitungen führt, wenn die erste Verbindungskomponente in der zweiten Funktionsstellung ist. Das zweite männliche Verbindungselement und das zweite weibliche Verbindungselement werden dabei aufeinander zu bewegt. Dabei reicht eine Relativbewegung zwischen dem zweiten männlichen Verbindungselement und dem zweiten weiblichen Verbindungselement aus, d. h. es muss lediglich eines der beiden Verbindungselemente, d. h. entweder das zweite männliche Verbindungselement oder das zweite weibliche Verbindungselement, in Umfangsrichtung bewegt werden.

Weiter kann die Vorrichtung eine Vielzahl von zweiten männlichen und zweiten weiblichen Verbindungselementen aufweisen. Dabei kann in einem Beispiel jede Fluidleitung z. B. jeweils ein zweites männliches und ein zweites weibliches Verbindungselement aufweisen. Das zweite männliche Verbindungselement einer Fluidleitung kann dabei in das jeweilige zweite weibliche Verbindungselement der anderen Fluidleitung eingeführt werden, wenn die erste Verbindungskomponente in der zweiten Funktionsstellung ist. Die Vielzahl von zweiten männlichen Verbindungselementen ist dabei entlang der Umfangsrichtung in die gleiche Richtung ausgerichtet. Entsprechend ist die Vielzahl der zweiten weiblichen Verbindungselemente entlang der Umfangsrichtung in die gleiche Richtung ausgerichtet.

In einem anderen Beispiel kann eine Fluidleitung alle zweiten männlichen Verbindungselemente aufweisen und die andere Fluidleitung alle weiblichen Verbindungselemente.

Alternativ kann die zweite Verbindungskomponente zwei flache Verbindungselemente an den verschiedenen Fluidleitungen aufweisen, wobei die flachen Verbindungselemente einander in der Verbindungsstellung berühren.

In einem weiteren Beispiel können die weiteren Leitungen Heizdrähte sein.

Mittels der Heizdrähte kann die Vorrichtung beheizt werden, sodass einem Einfrieren der Vorrichtung, insbesondere eines Fluids in der ersten Verbindungskomponente, entgegengewirkt werden kann. Die Heizdrähte können dabei um die erste Verbindungskomponente gewickelt sein, um eine vollflächige Beheizung der ersten Verbindungskomponente und der Vorrichtung bereitzustellen.

Die weiteren Leitungen können alternativ oder zusätzlich Steuerungsleitungen sein, die Steuersignale leiten.

Ebenfalls können alternativ oder zusätzlich die weiteren Leitungen optische Leitungen, wie z. B. Glasfasern, sein.

Weiter kann die Vorrichtung eine erste Gehäusehälfte und eine zweite Gehäusehälfte aufweisen, wobei die erste Gehäusehälfte mit einer der zwei Fluidleitungen verbunden ist, wobei die zweite Gehäusehälfte mit der anderen der zwei Fluidleitungen verbunden ist, wobei die erste Gehäusehälfte und die zweite Gehäusehälfte ein Gehäuse bilden, wenn die erste Verbindungskomponente in der zweiten Funktionsstellung ist, wobei die erste und zweite Verbindungskomponente innerhalb der ersten und zweiten Gehäusehälfte angeordnet sind.

Die Gehäusehälften stellen einen Schutz für die Vorrichtung und die Verbindungskomponenten bereit. Weiter kann ein Nutzer die beiden Gehäusehälften als Angriffsflächen für die Handhabung der Vorrichtung verwenden.

Die Gehäusehälften können dabei eine spaltlose Verbindung miteinander aufweisen, wenn die erste Verbindungskomponente in der zweiten Funktionsstellung ist.

Mittels der spaltlosen Verbindung zwischen den beiden Gehäusehälften, wenn die erste Verbindungskomponente in der zweiten Funktionsstellung ist, wird die Dichtigkeit der Verbindung zwischen den beiden Fluidleitungen verbessert. Weiter wird ein Wärmeverlust minimiert, da mittels der spaltlosen Verbindung keine direkte Verbindung zwischen der Umgebung und dem Inneren der Vorrichtung besteht, wenn die erste Verbindungskomponente in der zweiten Funktionsstellung ist.

Weiter kann die erste Gehäusehälfte das erste männliche Verbindungselement aufweisen und die zweite Gehäusehälfte das erste weibliche Verbindungselement aufweisen.

Das erste männliche Verbindungselement und das erste weibliche Verbindungselement sind damit auf verschiedenen Fluidleitungen angeordnet. Weiter wird das erste männliche Verbindungselement damit von der ersten Gehäusehälfte umfasst und geschützt und das erste weibliche Verbindungselement von der zweiten Gehäusehälfte umfasst und geschützt.

Es kann weiter vorgesehen sein, dass die erste Gehäusehälfte das zweite männliche Verbindungselement aufweist und die zweite Gehäusehälfte das zweite weibliche Verbindungselement aufweist.

Das zweite männliche Verbindungselement und das zweite weibliche Verbindungselement sind damit an verschiedenen Fluidleitungen angeordnet. Weiter wird das zweite männliche Verbindungselement damit von der ersten Gehäusehälfte umfasst und geschützt und das zweite weibliche Verbindungselement von der zweiten Gehäusehälfte umfasst und geschützt.

Die Vorrichtung kann in einem weiteren Beispiel eine weitere Verriegelungskomponente zum Verriegeln der ersten Verbindungskomponente in der zweiten Funktionsstellung aufweisen.

Mit der weiteren Verriegelungskomponente wird zusätzlich zur ersten Verriegelungskomponente eine Verriegelung bewirkt, sodass auch bei Schäden an der ersten Verriegelungskomponente eine Verriegelung der zweiten Funktionsstellung der ersten Verbindungskomponente bewirkt wird. Dies vermeidet, dass bei einer Beschädigung der ersten Verriegelungskomponente die Verbindung zwischen den beiden Fluidleitungen gelöst wird und Flüssigkeit austritt.

Dabei kann die weitere Verriegelungskomponente ein Verschlusselement aufweisen.

Das Verschlusselement kann zum Beispiel als Bügel ausgebildet sein, der an einer der beiden Fluidleitungen befestigt ist. An der anderen der beiden Fluidleitungen kann ein Vorsprung vorgesehen sein. Der Bügel kann dabei zum Verriegeln der ersten Verbindungskomponente über den Vorsprung geführt werden.

Die weitere Verriegelungskomponente kann in die erste und/oder zweite Gehäusehälfte integriert sein.

Damit wird eine Reduktion der Bauteile bewirkt und die Herstellung der Vorrichtung vereinfacht.

In einem alternativen Beispiel kann die weitere Verriegelungskomponente separat bereitgestellt werden und nachträglich mit der Vorrichtung verbunden werden.

Weiter kann die erste Verbindungskomponente mindestens ein Dichtungselement zum Anordnen zwischen die zwei Fluidleitungen aufweisen.

Dabei kann das mindestens eine Dichtungselement ein O-Ring sein.

Weiter ist ein System vorgesehen umfassend eine Vorrichtung nach der vorhergehenden Beschreibung, wobei das System zwei weitere Leitungen und zwei Fluidleitungen umfasst, wobei die Vorrichtung die zwei weiteren Leitungen und die zwei Fluidleitungen miteinander verbindet.

Vorteile und Wirkungen sowie Weiterbildungen des Systems ergeben sich aus den Vorteilen und Wirkungen sowie Weiterbildungen der oben beschriebenen Vorrichtung. Es wird daher in dieser Hinsicht auf die vorangegangene Beschreibung verwiesen.

Dabei kann das System ein Katalysator zur selektiven katalytischen Reduktion oder ein Wasserinjektionssystem sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Vorrichtung zum Verbinden von Fluidleitungen und weiteren Leitungen;
- Fig. 2a, b: eine schematische Darstellung der Freigabestellung und Verbindungsstellung;
- Fig. 3a, b: eine schematische Darstellung der Gehäusehälften der Vorrichtung; und
- Fig. 4: eine schematische Darstellung des Systems.

Die Vorrichtung zum Verbinden von Fluidleitungen und weiteren Leitungen wird im Folgenden in ihrer Gesamtheit mit dem Bezugszeichen 10 bezeichnet.

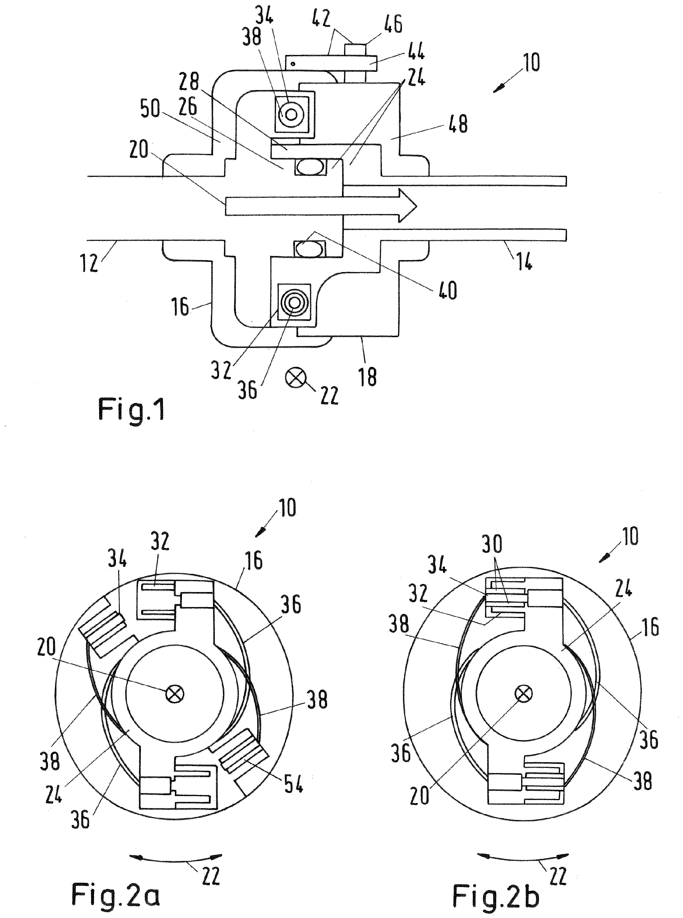

Figur 1 zeigt dabei einen Längsschnitt durch zwei Fluidleitungen 12, 14 und eine Vorrichtung 10. Die Vorrichtung 10 verbindet dabei die Fluidleitung 12 mit der Fluidleitung 14. Die Vorrichtung 10 umfasst eine erste Verbindungskomponente 24 zum Verbinden von Fluidleitungen und einer zweite Verbindungskomponente 30 zum Verbinden von weiteren Leitungen.

Die erste Verbindungskomponente 24 weist eine erste Funktionsstellung auf, in der sie die Fluidleitung 12 von der Fluidleitung 14 löst. Weiter umfasst die erste Verbindungskomponente 24 eine zweite Funktionsstellung, in der sie die Fluidleitung 12 mit der Fluidleitung 14 verbindet, wie in Figur 1 dargestellt. Dabei umfasst die erste Verbindungskomponente 24 weiter ein erstes männliches Verbindungselement 26, das mit der Fluidleitung 12 verbunden ist, und ein erstes weibliches Verbindungselement 28, das mit der Fluidleitung 14 verbunden ist. Der Übergang von der ersten Funktionsstellung in die zweite Funktionsstellung wird durch eine Bewegung des ersten männlichen Verbindungselements 26 entlang einer Verbindungsachse 20 der Vorrichtung 10 in Richtung des ersten weiblichen Verbindungselements 28 bewirkt. Dabei wird das erste männliche Verbindungselement 26 in das erste weibliche Verbindungselement 28 eingeführt.

Die Verbindungsachse 20 ist dabei entlang der Längsachse der beiden Fluidleitungen 12, 14 ausgerichtet, wenn die beiden Fluidleitungen 12, 14 miteinander fluchten.

Die zweite Verbindungskomponente 30 ist nach dem Einführen des ersten männlichen Verbindungselements 26 in das erste weibliche Verbindungselement 28 zunächst in der Freigabestellung, in der die zweite Verbindungskomponente 30 die weiteren Leitungen 36, 38 voneinander löst, wie in Figur 2a dargestellt. Zum Überführen der zweiten Verbindungskomponente 30 von der Freigabestellung in die Verbindungsstellung, in der die zweite Verbindungskomponente 30 die weitere Leitung 36 mit der weitere Leitung 38 verbindet, werden die Fluidleitungen 12 und 14 gegeneinander um die Verbindungsachse 20 gedreht. Die Verbindungsstellung ist in Figur 2b dargestellt.

Weiter umfasst die Vorrichtung 10 gemäß Figur 1 mindestens ein Dichtungselement 40, das zwischen dem ersten männlichen Verbindungselement 26 und dem ersten weiblichen Verbindungselement 28 angeordnet sein kann, um eine Abdichtung bereitzustellen, wenn das erste männliche Verbindungselements 26 in das erste weibliche Verbindungselement 28 eingeführt ist und die erste Verbindungskomponente 24 damit in der zweiten Funktionsstellung ist. Dabei kann die Vorrichtung 10 zwei Dichtungselemente 40 umfassen, die zwischen dem ersten männlichen Verbindungselement 26 und ersten weiblichen Verbindungselement 28 angeordnet sind, wenn die erste Verbindungskomponente 24 in der zweiten Funktionsstellung ist.

Das mindestens eine Dichtungselement 40 kann als O-Ring ausgebildet sein, der sich um das erste männliche Verbindungselement 26 erstreckt, wenn die erste Verbindungskomponente 24 in der ersten Funktionsstellung ist. Alternativ kann sich das Dichtungselement 40 in der ersten Funktionsstellung der ersten Verbindungskomponente 24 entlang einer sich um die Verbindungsachse 20 erstreckende Innenfläche des ersten weiblichen Verbindungselements 28 erstrecken.

Weiter ist der O-Ring zwischen dem ersten männlichen Verbindungselement 26 und dem ersten weiblichen Verbindungselement 28 angeordnet, wenn die erste Verbindungskomponente 24 in der zweiten Funktionsstellung ist.

Dabei ist an der Fluidleitung 12 ein zweites männliches Verbindungselement 34 der zweiten Verbindungskomponente 30 angeordnet und an der Fluidleitung 14 ein zweites weibliches Verbindungselement 32 der zweiten Verbindungskomponente 30 angeordnet. Mittels der Drehung der Fluidleitungen 12 und 14 gegeneinander um die Verbindungsachse 20 werden das zweite männliche Verbindungselement 34 und das zweite weibliche Verbindungselement 32 entlang einer Umfangsrichtung 22 um die Verbindungsachse 20 bewegt. Die Drehung wird dabei so bewirkt, dass das zweite männliche Verbindungselement 34 auf das zweite weibliche Verbindungselement 32 zu bewegt wird. Das zweite männliche Verbindungselement 34 wird dabei in das zweite weibliche Verbindungselement 32 eingeführt. Durch das Einführen des zweiten männlichen Verbindungselements 34 in das zweite weibliche Verbindungselement 32 werden die weiteren Leitungen 36 und 38 miteinander verbunden. Weiter erfolgt damit eine Verriegelung der zweiten Funktionsstellung der ersten Verbindungskomponente 24. Die zweite Verbindungskomponente 30 wirkt damit gleichzeitig als eine Verriegelungskomponente 54, wobei die Freigabestellung einer Entriegelungsstellung der Verriegelungskomponente 54 entspricht und die Verbindungsstellung der zweiten Verbindungskomponente 30 einer Verriegelungsstellung der Verriegelungskomponente 54 entspricht. Das zweite männliche Verbindungselement 34 wirkt dabei als Riegelelement der Verriegelungskomponente 54.

Die Vorrichtung 10 kann eine weitere Verriegelungskomponente 42 aufweisen. Die weitere Verriegelungskomponente 42 umfasst dabei ein Verschlusselement 44, das an einer der beiden Gehäusehälften 16, 18 angeordnet sein kann. In Figur 1 ist das Verschlusselement 44 an der Gehäusehälfte 16 angeordnet und als Bügel ausgebildet. An der Gehäusehälfte 18 ist weiter ein Vorsprung 46 angeordnet, über den das Verschlusselement 44 geführt werden kann. Die weitere Verriegelungskomponente 42 verriegelt die erste Verbindungskomponente 24 in der zweiten Funktionsstellung, wenn die zweite Verbindungskomponente 30 in der Verbindungsstellung ist.

Wenn die erste Verbindungskomponente 24 in der zweiten Funktionsstellung ist, greifen die beiden Gehäusehälften 16, 18 ineinander und bilden in Kombination ein spaltloses Gehäuse. D.h., dass ein Strömungskanal der Fluidleitungen 12, 14 für das Fluid zwischen den beiden Gehäusehälften 16, 18 keine offene Verbindung zur äußeren Umgebung aufweist.

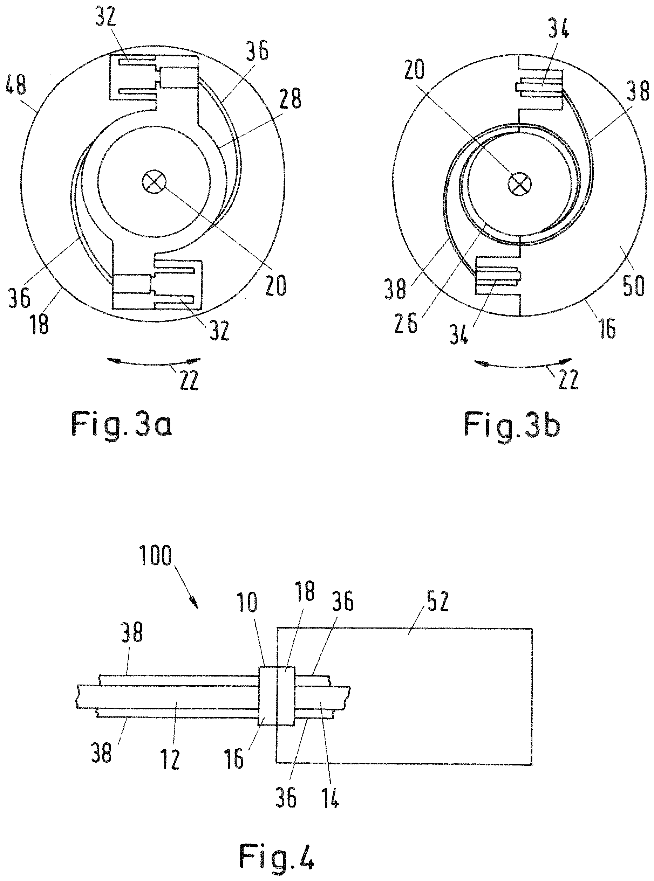

Figur 3a zeigt die zweite Gehäusehälfte 18, die mit der Fluidleitung 14 verbunden ist. Die zweite Gehäusehälfte 18 der Vorrichtung 10 umschließt dabei ein Leitungsendstück 48, das mit der Fluidleitung 14 verbunden ist, das erste weibliche Verbindungselement 28 der ersten Verbindungskomponente 24, mindestens ein zweites weibliches Verbindungselement 32 der zweiten Verbindungskomponente 30 und die weitere Leitung 36. Wenn die weitere Leitung 36 als ein Heizdraht ausgebildet ist, kann die weitere Leitung 36 innerhalb der zweiten Gehäusehälfte 18 um die Fluidleitung 14 und das erste weibliche Verbindungselement 28 gewickelt sein. Damit kann die als Heizdraht ausgebildete weitere Leitung 36 die zweite Gehäusehälfte 18 über den gesamten Umfang heizen, sodass einem Einfrieren eines Fluids in der Fluidleitung 14 an der zweiten Gehäusehälfte 18 entgegengewirkt wird.

Das erste weibliche Verbindungselement 28 ist dabei entlang der Verbindungachse 20 ausgerichtet. Die Verbindungsachse 20 ist ihrerseits entlang einer Strömungsrichtung des Fluids in der Fluidleitung 14 ausgerichtet, wenn die Fluidleitung 14 mit der Fluidleitung 12 verbunden ist.

Das zweite weibliche Verbindungselement 32 ist entlang einer Umfangsrichtung 22, die sich um die Verbindungsachse 20 erstreckt, ausgerichtet. Weiter weist die zweite Gehäusehälfte 18 in diesem Beispiel zwei zweite weibliche Verbindungselemente 32 auf. Die beiden zweiten weiblichen Verbindungselemente 32 sind dabei an diametral gegenüberliegenden Positionen entlang des Umfangs der Fluidleitung 14 angeordnet. Weiter sind die beiden zweiten weiblichen Verbindungselemente 32 entlang der Umfangsrichtung 22 in die gleiche Richtung ausgerichtet. D.h., dass wenn der Umfangsrichtung 22 gefolgt wird, die beiden zweiten weiblichen Verbindungselemente 34 gleich ausgerichtet sind.

Figur 3b zeigt die erste Gehäusehälfte 16, die mit der Fluidleitung 12 verbunden ist. Die erste Gehäusehälfte 16 der Vorrichtung 10 umschließt dabei ein Leitungsendstück 50, das mit der Fluidleitung 12 verbunden ist. Weiter umschließt die erste Gehäusehälfte 16 das erste männliche Verbindungselement 26 der ersten Verbindungskomponente 24, mindestens ein zweites männliches Verbindungselement 34 der zweiten Verbindungskomponente 30 und eine weitere Leitung 38. Die weitere Leitung 38 kann als Heizdraht ausgebildet sein und dann innerhalb der ersten Gehäusehälfte 16 um die Fluidleitung 12 und das erste männliche Verbindungselement 26 gewickelt sein. Dies bewirkt, dass die weitere Leitung 38 die erste Gehäusehälfte 16 über den gesamten Umfang heizen kann, um einem Einfrieren eines Fluids in der Fluidleitung 12 entgegenzuwirken.

Das erste männliche Verbindungselement 26 ist dabei entlang der Verbindungachse 20 ausgerichtet, die parallel zu einer Strömungsrichtung eines Fluids in der Fluidleitung 12 orientiert ist, wenn die Fluidleitung 12 mit der Fluidleitung 14 verbunden ist. Damit kann das erste männliche Verbindungselement 26 entlang der Verbindungsachse 20 in das erste weibliche Verbindungselement 28 eingeführt werden, um die erste Verbindungskomponente 24 von der ersten Funktionsstellung in die zweite Funktionsstellung zu überführen.

Das mindestens eine zweite männliche Verbindungselement 34 ist entlang der Umfangsrichtung 22, die sich um die Verbindungachse 20 erstreckt, ausgerichtet. In diesem Beispiel umfasst die zweite Verbindungskomponente 30 zwei zweite männliche Verbindungselemente 34. Die beiden zweiten männlichen Verbindungselemente 34 sind entlang der Umfangsrichtung 22 diametral gegenüber angeordnet. Sie weisen dabei entlang der Umfangsrichtung 22 in die gleiche Richtung.

Die weiteren Leitungen 36, 38 können alternativ oder zusätzlich optische Leitungen, zum Beispiel Glasfasern, sein.

Alternativ oder zusätzlich können die weiteren Leitungen 36, 38 elektrische Leitungen sein, die Signale übertragen.

Figur 4 zeigt ein System 100, das einen Katalysator 52 zur selektiven katalytischen Reduktion, zwei Fluidleitungen 12, 14 und zwei weitere Leitungen 36, 38 umfasst. Die Fluidleitung 14 ist dabei in dem Katalysator 52 angeordnet. Ebenfalls ist die weitere Leitung 36 in dem Katalysator 52 angeordnet. Die Fluidleitung 12 und die weitere Leitung 38 sind außerhalb des Katalysators 52 angeordnet. Die Vorrichtung 10 verbindet dabei die beiden Fluidleitungen 12, 14. Gleichzeitig verbindet die Vorrichtung 10 die beiden weiteren Leitungen 36, 38.

Die erste Gehäusehälfte 16 der Vorrichtung 10 ist dabei mit der Fluidleitung 12 verbunden. Weiter ist die zweite Gehäusehälfte 18 der Vorrichtung 10 mit der Fluidleitung 12 verbunden. Damit ist die zweite Gehäusehälfte 18 ebenfalls mit dem Katalysator 52 verbunden.

Anstatt des Katalysators 52 zur selektiven katalytischen Reduktion kann ein Wasserinjektionssystem vorgesehen sein, das die Fluidleitung 14 und die weitere Leitung 36 umfasst. Das Wasserinjektionssystem ist nicht dargestellt.

Die Erfindung ist nicht auf eine der vorbeschriebenen Ausführungsformen beschränkt, sondern in vielfältiger Weise im Rahmen der Ansprüche abwandelbar.

### Bezugszeichenliste

- 10: Vorrichtung
- 12: Fluidleitung
- 14: Fluidleitung
- 16: erste Gehäusehälfte
- 18: zweite Gehäusehälfte
- 20: Verbindungsachse
- 22: Umfangsrichtung
- 24: erste Verbindungskomponente
- 26: erstes männliches Verbindungselement
- 28: erstes weibliches Verbindungselement
- 30: zweite Verbindungskomponente
- 32: zweites weibliches Verbindungselement
- 34: zweites männliches Verbindungselement
- 36: weitere Leitung
- 38: weitere Leitung
- 40: Dichtungselement
- 42: weitere Verriegelungskomponente
- 44: Verschlusselement
- 46: Vorsprung
- 48: Leitungsendstück
- 50: Leitungsendstück
- 52: Katalysator
- 54: Verriegelungskomponente
- 100: System

## Patentansprüche

1. Vorrichtung zum Verbinden von Fluidleitungen (12, 14) und weiteren Leitungen (36, 38), wobei die Vorrichtung (10) eine erste Verbindungskomponente (24) zum Verbinden von Fluidleitungen (12, 14) und eine zweite Verbindungskomponente (30) zum Verbinden von weiteren Leitungen (36, 38) aufweist, wobei die erste Verbindungskomponente (24) eine erste Funktionsstellung, in der die erste Verbindungskomponente (24) die zwei Fluidleitungen (12, 14) voneinander löst, und eine zweite Funktionsstellung, in der die erste Verbindungskomponente (24) zwei Fluidleitungen (12, 14) verbindet, aufweist, wobei eine Bewegung der ersten Verbindungskomponente (24) entlang einer Verbindungsachse (20) der Vorrichtung (10) die erste Verbindungskomponente (24) zwischen der ersten und zweiten Funktionsstellung überführt, wobei die zweite Verbindungskomponente (30) in einer Verbindungsstellung zwei weitere Leitungen (36, 38) verbindet und in einer Freigabestellung die zwei weiteren Leitungen (36, 38) voneinander löst, wobei eine Bewegung der zweiten Verbindungskomponente (30) in einer Umfangsrichtung (22) um die Verbindungsachse (20) die zweite Verbindungskomponente (30) zwischen der Freigabestellung und der Verbindungsstellung überführt, wenn die erste Verbindungskomponente (24) in der zweiten Funktionsstellung ist, wobei die Vorrichtung (10) eine Verriegelungskomponente (54) aufweist, die in einer Verriegelungsstellung die erste Verbindungskomponente (24) in der zweiten Funktionsstellung verriegelt und in einer Entriegelungsstellung die erste Verbindungskomponente (24) frei gibt, **dadurch gekennzeichnet, dass** die Verriegelungskomponente (54) ein Riegelelement aufweist, das entlang der Umfangsrichtung ausgerichtet ist, wobei eine Bewegung der Verriegelungskomponente (54) in Umfangsrichtung die Verriegelungskomponente (54) zwischen der Verriegelungsstellung und der Entriegelungsstellung überführt, wenn die erste Verbindungskomponente (24) in der zweiten Funktionsstellung ist.

2. Vorrichtung nach Anspruch 1, **dadurch gekennzeichnet, dass** die zweite Verbindungskomponente (30) die Verriegelungskomponente (54) ist.

3. Vorrichtung nach Anspruch 1 oder 2, **dadurch gekennzeichnet, dass** die erste Verbindungskomponente (24) ein erstes männliches Verbindungselement (26) an einer der zwei Fluidleitungen (12, 14) und ein erstes weibliches Verbindungselement (28) an der anderen der zwei Fluidleitungen (12, 14) aufweist, wobei das erste männliche Verbindungselement (26) und das erste weibliche Verbindungselement (28) vorzugsweise entlang der Verbindungsachse (20) ausgerichtet sind.

4. Vorrichtung nach einem der Ansprüche 1 bis 3, **dadurch gekennzeichnet, dass** die zweite Verbindungskomponente (30) ein zweites männliches Verbindungselement (34) an einer der zwei weiteren Leitungen (36, 38) und ein zweites weibliches Verbindungselement (32) an der anderen der zwei weiteren Leitungen (36, 38) aufweist, wobei das zweite männliche Verbindungselement (34) und das zweite weibliche Verbindungselement (32) vorzugsweise entlang der Umfangsrichtung (22) ausgerichtet sind.

5. Vorrichtung nach einem der Ansprüche 1 bis 4, **dadurch gekennzeichnet, dass** die weiteren Leitungen (36, 38) Heizdrähte sind.

6. Vorrichtung nach einem der Ansprüche 1 bis 5, **dadurch gekennzeichnet, dass** die Vorrichtung (10) eine erste Gehäusehälfte (16) und eine zweite Gehäusehälfte (18) aufweist, wobei die erste Gehäusehälfte (16) mit einer der zwei Fluidleitungen (12, 14) verbunden ist, wobei die zweite Gehäusehälfte (18) mit der anderen der zwei Fluidleitungen (12, 14) verbunden ist, wobei die erste Gehäusehälfte (16) und die zweite Gehäusehälfte (18) ein Gehäuse bilden, wenn die erste Verbindungskomponente (24) in der zweiten Funktionsstellung ist, wobei die erste und zweite Verbindungskomponente (30) innerhalb der ersten und zweiten Gehäusehälften (16, 18) angeordnet sind.

7. Vorrichtung nach Anspruch 6, **dadurch gekennzeichnet, dass** die Gehäusehälften (16, 18) eine spaltlose Verbindung miteinander aufweisen, wenn die erste Verbindungskomponente (24) in der zweiten Funktionsstellung ist.

8. Vorrichtung nach Anspruch 6 oder 7, in Verbindung mit Anspruch 3, **dadurch gekennzeichnet, dass** die erste Gehäusehälfte (16) das erste männliche Verbindungselement (26) aufweist und die zweite Gehäusehälfte (18) das erste weibliche Verbindungselement (28) aufweist.

9. Vorrichtung nach einem der Ansprüche 6 bis 8 in Verbindung mit Anspruch 4, **dadurch gekennzeichnet, dass** die erste Gehäusehälfte (16) das zweite männliche Verbindungselement (34) aufweist und die zweite Gehäusehälfte (18) das zweite weibliche Verbindungselement (32) aufweist.

10. Vorrichtung nach einem der Ansprüche 1 bis 9, **dadurch gekennzeichnet, dass** die Vorrichtung (10) eine weitere Verriegelungskomponente (42) zum Verriegeln der ersten Verbindungskomponente (24) in der zweiten Funktionsstellung aufweist, wobei die weitere Verriegelungskomponente (42) vorzugsweise ein Verschlusselement (46) aufweist.

11. Vorrichtung nach Anspruch 10 und einem der Ansprüche 6 bis 9, **dadurch gekennzeichnet, dass** die weitere Verriegelungskomponente (42) in die erste und/oder zweite Gehäusehälfte (16, 18) integriert ist.

12. Vorrichtung nach einem der Ansprüche 1 bis 11, **dadurch gekennzeichnet, dass** die erste Verbindungskomponente (24) mindestens ein Dichtungselement (40) zum Anordnen zwischen die zwei Fluidleitungen (12, 14) aufweist, wobei das mindestens eine Dichtungselement (40) vorzugsweise ein O-Ring ist.

13. System umfassend eine Vorrichtung (10) nach einem der vorhergehenden Ansprüche, wobei das System (100) zwei weitere Leitungen (36, 38) und zwei Fluidleitungen (12, 14) umfasst, wobei die Vorrichtung (10) die zwei weiteren Leitungen (36, 38) und die zwei Fluidleitungen (12, 14) miteinander verbindet.

14. System nach Anspruch 13, **dadurch gekennzeichnet, dass** das System (100) ein Katalysator (52) zur selektiven katalytischen Reduktion oder ein Wasserinjektionssystem ist.

## Claims

1. Device for connecting fluid lines (12, 14) and further lines (36, 38), wherein the device (10) has a first connection component (24) for connecting fluid lines (12, 14) and has a second connection component (30) for connecting further lines (36, 38), wherein the first connection component (24) has a first functional position, in which the first connection component (24) releases the two fluid lines (12, 14) from one another, and has a second functional position, in which the first connection component (24) connects two fluid lines (12, 14), wherein a movement of the first connection component (24) along a connection axis (20) of the device (10) transfers the first connection component (24) between the first and second functional positions, wherein the second connection component (30), in a connection position, connects two further lines (36, 38) and, in a release position, releases the two further lines (36, 38) from one another, wherein a movement of the second connection component (30) in a circumferential direction (22) about the connection axis (20) transfers the second connection component (30) between the release position and the connection position if the first connection component (24) is in the second functional position, wherein the device (10) has a locking component (54) which, in a locking position, locks the first connection component (24) in the second functional position and which, in an unlocking position, releases the first connection component (24), **characterized in that** the locking component (54) has a lock element which is oriented along the circumferential direction, wherein a movement of the locking component (54) in the circumferential direction transfers the locking component (54) between the locking position and the unlocking position if the first connection component (24) is in the second functional position.

2. Device according to Claim 1, **characterized in that** the second connection component (30) is the locking component (54).

3. Device according to Claim 1 or 2, **characterized in that** the first connection component (24) has a first male connection element (26) on one of the two fluid lines (12, 14) and has a first female connection element (28) on the other of the two fluid lines (12, 14), wherein the first male connection element (26) and the first female connection element (28) are preferably oriented along the connection axis (20) .

4. Device according to one of Claims 1 to 3, **characterized in that** the second connection component (30) has a second male connection element (34) on one of the two further lines (36, 38) and has a second female connection element (32) on the other of the two further lines (36, 38), wherein the second male connection element (34) and the second female connection element (32) are preferably oriented along the circumferential direction (22).

5. Device according to one of Claims 1 to 4, **characterized in that** the further lines (36, 38) are heating wires.

6. Device according to one of Claims 1 to 5, **characterized in that** the device (10) has a first housing half (16) and a second housing half (18), wherein the first housing half (16) is connected to one of the two fluid lines (12, 14), wherein the second housing half (18) is connected to the other of the two fluid lines (12, 14), wherein the first housing half (16) and the second housing half (18) form a housing if the first connection component (24) is in the second functional position, wherein the first connection component and the second connection component (30) are arranged within the first and second housing halves (16, 18).

7. Device according to Claim 6, **characterized in that** the housing halves (16, 18) have a gap-free connection to one another if the first connection component (24) is in the second functional position.

8. Device according to Claim 6 or 7 in conjunction with Claim 3, **characterized in that** the first housing half (16) has the first male connection element (26), and the second housing half (18) has the first female connection element (28).

9. Device according to one of Claims 6 to 8 in conjunction with Claim 4, **characterized in that** the first housing half (16) has the second male connection element (34), and the second housing half (18) has the second female connection element (32).

10. Device according to one of Claims 1 to 9, **characterized in that** the device (10) has a further locking component (42) for locking the first connection component (24) in the second functional position, wherein the further locking component (42) preferably has a closure element (46).

11. Device according to Claim 10 and one of Claims 6 to 9, **characterized in that** the further locking component (42) is integrated into the first and/or second housing half (16, 18).

12. Device according to one of Claims 1 to 11, **characterized in that** the first connection component (24) has at least one seal element (40) for arrangement between the two fluid lines (12, 14), wherein the at least one seal element (40) is preferably an O-ring.

13. System comprising a device (10) according to one of the preceding claims, wherein the system (100) comprises two further lines (36, 38) and two fluid lines (12, 14), wherein the device interconnects the two further lines (36, 38) and the two fluid lines (12, 14).

14. System according to Claim 13, **characterized in that** the system (100) is a catalytic converter (52) for selective catalytic reduction or is a water-injection system.

## Revendications

1. Dispositif pour connecter des conduites de fluide (12, 14) et d'autres conduites (36, 38), le dispositif (10) comprenant un premier composant de connexion (24) pour connecter des conduites de fluide (12, 14) et un deuxième composant de connexion (30) pour connecter d'autres conduites (36, 38), le premier composant de connexion (24) ayant une première position fonctionnelle dans laquelle le premier composant de connexion (24) déconnecte les deux conduites de fluide (12, 14) l'une de l'autre, et une deuxième position fonctionnelle dans laquelle le premier composant de connexion (24) connecte les deux conduites de fluide (12, 14) l'une de l'autre, un mouvement du premier composant de connexion (24) le long d'un axe de connexion (20) du dispositif (10) commutant le premier composant de connexion (24) entre la première et la deuxième position fonctionnelle, le deuxième composant de connexion (30) reliant deux autres conduites (36, 38) dans une position de connexion et déconnectant les deux autres conduites (36, 38) dans une position de libération, un mouvement du deuxième composant de connexion (30) dans une direction circonférentielle (22) autour de l'axe de connexion (20) commutant le deuxième composant de connexion (30) entre la position de libération et la position de connexion lorsque le premier composant de connexion (24) est dans la deuxième position fonctionnelle, le dispositif (10) comportant un composant de verrouillage (54) qui, dans une position de verrouillage, verrouille le premier composant de connexion (24) dans la deuxième position fonctionnelle et, dans une position de déverrouillage, libère le premier composant de connexion (24), **caractérisé en ce que** le composant de verrouillage (54) comprend un élément de verrouillage orienté le long de la direction circonférentielle, un mouvement du composant de verrouillage (54) dans la direction circonférentielle commutant le composant de verrouillage (54) entre la position de verrouillage et la position de déverrouillage lorsque le premier composant de connexion (24) est dans la deuxième position fonctionnelle.

2. Dispositif selon la revendication 1, **caractérisé en ce que** le deuxième composant de connexion (30) est le composant de verrouillage (54).

3. Dispositif selon la revendication 1 ou 2, **caractérisé en ce que** le premier composant de connexion (24) comprend un premier élément de connexion mâle (26) sur l'une des deux conduites de fluide (12, 14) et un premier élément de connexion femelle (28) sur l'autre des deux conduites de fluide (12, 14), le premier élément de connexion mâle (26) et le premier élément de connexion femelle (28) étant de préférence alignés selon l'axe de connexion (20).

4. Dispositif selon l'une des revendications 1 à 3, **caractérisé en ce que** le deuxième composant de connexion (30) comprend un deuxième élément de connexion mâle (34) sur l'une des deux autres conduites (36, 38) et un deuxième élément de connexion femelle (32) sur l'autre des deux autres conduits (36, 38), le deuxième élément de connexion mâle (34) et le deuxième élément de connexion femelle (32) étant de préférence alignés selon la direction circonférentielle (22).

5. Dispositif selon l'une des revendications 1 à 4, **caractérisé en ce que** les autres conduites (36, 38) sont des fils chauffants.

6. Dispositif selon l'une des revendications 1 à 5, **caractérisé en ce que** le dispositif (10) comprend une première moitié de boîtier (16) et une deuxième moitié de boîtier (18), la première moitié de boîtier (16) étant reliée à l'une des deux conduites de fluide (12, 14), la deuxième moitié de boîtier (18) étant reliée à l'autre des deux conduites de fluide (12, 14), la première moitié de boîtier (16) et la deuxième moitié de boîtier (18) formant un boîtier lorsque le premier composant de connexion (24) est dans la deuxième position fonctionnelle, les premier et deuxième composants de connexion (30) étant agencés à l'intérieur des première et deuxième moitiés de boîtier (16, 18).

7. Dispositif selon la revendication 6, **caractérisé en ce que** les moitiés de boîtier (16, 18) présentent une liaison sans fente entre elles lorsque le premier composant de connexion (24) est dans la deuxième position fonctionnelle.

8. Dispositif selon la revendication 6 ou 7, en liaison avec la revendication 3, **caractérisé en ce que** la première moitié de boîtier (16) présente le premier élément de liaison mâle (26) et la deuxième moitié de boîtier (18) présente le premier élément de liaison femelle (28).

9. Dispositif selon l'une des revendications 6 à 8 en combinaison avec la revendication 4, **caractérisé en ce que** la première moitié de boîtier (16) comprend le deuxième élément de connexion mâle (34) et la deuxième moitié de boîtier (18) comprend le deuxième élément de connexion femelle (32).

10. Dispositif selon l'une des revendications 1 à 9, **caractérisé en ce que** le dispositif (10) comporte un autre composant de verrouillage (42) pour verrouiller le premier composant de connexion (24) dans la deuxième position fonctionnelle, l'autre composant de verrouillage (42) comportant de préférence un élément de fermeture (46).

11. Dispositif selon la revendication 10 et l'une des revendications 6 à 9, **caractérisé en ce que** l'autre composant de verrouillage (42) est intégré dans la première et/ou la deuxième moitié de boîtier (16, 18).

12. Dispositif selon l'une des revendications 1 à 11, **caractérisé en ce que** le premier composant de connexion (24) comprend au moins un élément d'étanchéité (40) destiné à être placé entre les deux conduites de fluide (12, 14), ledit au moins un élément d'étanchéité (40) étant de préférence un joint torique.

13. Système comprenant un dispositif (10) selon l'une des revendications précédentes, le système (100) comprenant deux autres conduites (36, 38) et deux conduits de fluide (12, 14), le dispositif (10) reliant entre elles les deux autres conduites (36, 38) et les deux conduites de fluide (12, 14).

14. Système selon la revendication 13, **caractérisé en ce que** le système (100) est un catalyseur (52) de réduction catalytique sélective ou un système d'injection d'eau.
